# EUROPÄISCHE PATENTANMELDUNG

(11) **EP 3 130 917 A1**
(43) Veröffentlichungstag der Anmeldung: **15.02.2017**
(21) Anmeldenummer: 16173651.7
(22) Anmeldetag: 09.06.2016
(51) Int. Cl.: G01N 27/407

(54) **SENSORELEMENT ZUR ERFASSUNG MINDESTENS EINER EIGENSCHAFT EINES MESSGASES IN EINEM MESSGASRAUM**

(30) Priorität: 13.08.2015 DE 102015215437
(71) Anmelder: ROBERT BOSCH GMBH, 70442 Stuttgart (DE)
(72) Erfinder: Nolte, Philipp, 70839 Gerlingen (DE)

(57) **Zusammenfassung**

Es wird ein Sensorelement (10) zur Erfassung mindestens einer Eigenschaft eines Messgases in einem Messgasraum, insbesondere zur Erfassung eines Anteils einer Gaskomponente in dem Messgas oder einer Temperatur des Messgases, vorgeschlagen. Das Sensorelement (10) umfasst ein Trägerelement (12) und einen Schichtaufbau (14). Der Schichtaufbau (14) umfasst mindestens eine Festelektrolytschicht (16), eine erste Elektrode (18) und eine zweite Elektrode (20). Der Schichtaufbau (14) ist auf dem Trägerelement (12) angeordnet.

## Beschreibung

### Stand der Technik

Aus dem Stand der Technik ist eine Vielzahl von Sensorelementen und Verfahren zur Erfassung mindestens einer Eigenschaft eines Messgases in einem Messgasraum bekannt. Dabei kann es sich grundsätzlich um beliebige physikalische und/oder chemische Eigenschaften des Messgases handeln, wobei eine oder mehrere Eigenschaften erfasst werden können. Die Erfindung wird im Folgenden insbesondere unter Bezugnahme auf eine qualitative und/oder quantitative Erfassung eines Anteils einer Gaskomponente des Messgases beschrieben, insbesondere unter Bezugnahme auf eine Erfassung eines Sauerstoffanteils in dem Messgasteil. Der Sauerstoffanteil kann beispielsweise in Form eines Partialdrucks und/oder in Form eines Prozentsatzes erfasst werden. Alternativ oder zusätzlich sind jedoch auch andere Eigenschaften des Messgases erfassbar, wie beispielsweise die Temperatur.

Aus dem Stand der Technik sind insbesondere keramische Sensorelemente bekannt, welche auf der Verwendung von elektrolytischen Eigenschaften bestimmter Festkörper basieren, also auf Ionen leitenden Eigenschaften dieser Festkörper. Insbesondere kann es sich bei diesen Festkörpern um keramische Festelektrolyte handeln, wie beispielsweise Zirkoniumdioxid (ZrO₂), insbesondere yttriumstabilisiertes Zirkoniumdioxid (YSZ) und scandiumdotiertes Zirkoniumdioxid (ScSZ), die geringe Zusätze an Aluminiumoxid (Al₂O₃) und/oder Siliziumoxid (SiO₂) enthalten können.

Beispielsweise können derartige Sensorelemente als so genannte Lambdasonden oder als Stickoxidsensoren ausgestaltet sein, wie sie beispielsweise aus K. Reif, Deitsche, K-H. et al., Kraftfahrtechnisches Taschenbuch, Springer Vieweg, Wiesbaden, 2014, Seiten 1338-1347, bekannt sind. Mit Breitband-Lambdasonden, insbesondere mit planaren Breitband-Lambdasonden, kann beispielsweise die Sauerstoffkonzentration im Abgas in einem großen Bereich bestimmt und damit auf das Luft-Kraftstoff-Verhältnis im Brennraum geschlossen werden. Die Luftzahl λ (Lambda) beschreibt dieses Luft-Kraftstoff-Verhältnis. Stickoxid-Sensoren bestimmen sowohl die Stickoxid- als auch die Sauerstoffkonzentration im Abgas.

Bisher werden im Bereich der Abgassensorik als Lambdasonden zur Messung der Sauerstoffkonzentration im Abgas vor allem Stäbchensensoren aus Keramik verwendet, die mittels der so genannten Dickschichttechnologie hergestellt werden. Als Weiterentwicklung wurde das Konzept eines mikrostrukturierten Sensors vorgeschlagen, der einen elektrochemischen Chip auf Basis der Dünnschichttechnologie umfasst. Ein derartiger Sensor ist beispielsweise in der DE 10 2012 202 783 A1 oder der DE 10 2013 204 197 A1 beschrieben. Im Kern besteht der Sensor aus einer dünnen Membran. Letztere Technik hat gegenüber der Dickschichttechnologie Vorteile, wie beispielsweise hinsichtlich des geringeren Platzbedarfs und weniger Heizleistung. Die Membran muss jedoch beispielsweise Druckunterschieden zwischen Messgasen und Referenzluft bzw. Druckpulsen und Schwingungen standhalten.

Die DE 10 2013 204 463 A1 beschreibt die Anordnung einer Referenzelektrode im Messgas. Dadurch entfällt die Anbindung an eine echte Referenzluft. Allerdings wird dort keine Herstellung mittels der Dünnschichttechnologie beschrieben.

Trotz der Vorteile der aus dem Stand der Technik bekannten Sensorelemente und Verfahren zum Herstellen derselben beinhalten diese noch Verbesserungspotenzial. So befinden sich bei der DE 10 2013 204 197 A1 und DE 10 2012 202 783 A1 die elektrischen Kontakte der Messelektroden der Referenzelektrode auf verschiedenen Seiten des Sensorchips. Entsprechend müssen Anschlussleitungen von beiden Seiten befestigt werden oder zusätzlich eine metallische Durchführung in das Trägermaterial oder eine Leiterbahn um den Chip gelegt werden. Dadurch wird die Herstellung schwieriger. Bei der DE 10 2013 204 463 A1 wird noch kein konkretes Design, das speziell auf Dünnschichtelektrolyten ausgelegt ist, angegeben. Insbesondere wurde dort noch keine Optimierung für die Elektrodenanordnung angegeben, um Sauerstoff an der Referenzelektrode besonders effektiv zu speichern.

### Offenbarung der Erfindung

Es wird daher ein Sensorelement zur Erfassung mindestens einer Eigenschaft eines Messgases in einem Messgasraum vorgeschlagen, welches die Nachteile bekannter Sensorelemente zumindest weitgehend vermeidet, bei dem ein konkretes Design für einen Sauerstoffsensor auf Basis eines Dünnschichtelektrolyten angegeben wird und bei dem ein Chip vollständig im Abgas platziert werden kann.

Ein erfindungsgemäßes Sensorelement zur Erfassung mindestens einer Eigenschaft eines Messgases in einem Messgasraum, insbesondere zur Erfassung eines Anteils einer Gaskomponente in dem Messgas oder einer Temperatur des Messgases umfasst ein Trägerelement und einen Schichtaufbau. Der Schichtaufbau umfasst mindestens eine Festelektrolytschicht, eine erste Elektrode und eine zweite Elektrode. Der Schichtaufbau ist auf dem Trägerelement angeordnet.

Die Festelektrolytschicht kann eine Dicke von 15 nm bis 25 µm und bevorzugt von 20 nm bis 20 µm aufweisen. Das Sensorelement kann weiterhin eine poröse Schicht umfassen. Die poröse Schicht kann so in oder auf dem Trägerelement angeordnet sein, dass die poröse Schicht dem Messgas aussetzbar ist. Die erste Elektrode kann auf der porösen Schicht angeordnet sein. Eine der porösen Schicht zugewandte Oberfläche der ersten Elektrode kann kleiner als eine der ersten Elektrode zugewandte Oberfläche der porösen Schicht sein. Eine der porösen Schicht zugewandte Oberfläche der Festelektrolytschicht kann kleiner als eine der Festelektrolytschicht zugewandte Oberfläche der porösen Schicht sein. Die erste Elektrode kann einen Anschlusskontakt aufweisen. Der Anschlusskontakt kann gegenüber dem Trägerelement elektrisch isoliert sein. Eine der ersten Elektrode und/oder der zweiten Elektrode zugewandte Oberfläche der Festelektrolytschicht kann größer als eine der Festelektrolytschicht zugewandte Oberfläche der ersten Elektrode und/oder der zweiten Elektrode sein. Das Sensorelement kann weiterhin ein Heizelement zum Erwärmen der Festelektrolytschicht umfassen. Das Heizelement kann auf dem Trägerelement, auf der Festelektrolytschicht, auf der porösen Schicht oder einer die zweite Elektrode bedeckenden gasdurchlässigen Abdeckschicht angeordnet sein.

Unter einer Schichtaufbau ist im Rahmen der vorliegenden Erfindung ein stapelförmiger Aufbau von Schichten zu verstehen und somit ein Aufbau, bei dem die Schichten über- bzw. untereinander angeordnet sind.

Unter einem Festelektrolyten ist im Rahmen der vorliegenden Erfindung ein Körper oder Gegenstand mit elektrolytischen Eigenschaften, also mit Ionen leitenden Eigenschaften, zu verstehen. Insbesondere kann es sich um einen keramischen Festelektrolyten handeln. Dies umfasst auch das Rohmaterial eines Festelektrolyten, der erst nach einem Sintern zu einem Festelektrolyten wird. Insbesondere kann der Festelektrolyt als Festelektrolytschicht oder aus mehreren Festelektrolytschichten ausgebildet sei. Unter einer Schicht ist im Rahmen der vorliegenden Erfindung eine einheitliche Masse in flächenhafter Ausdehnung einer gewissen Höhe zu verstehen, die über, unter oder zwischen anderen Elementen liegt.

Unter einer Elektrode ist im Rahmen der vorliegenden Erfindung allgemein ein Element zu verstehen, welches in der Lage ist, den Festelektrolyten derart zu kontaktieren, dass durch den Festelektrolyten und die Elektrode ein Strom aufrechterhalten werden kann. Dementsprechend kann die Elektrode ein Element umfassen, an welchem die Ionen in den Festelektrolyten eingebaut und/oder aus dem Festelektrolyten ausgebaut werden können. Typischerweise umfassen die Elektroden eine Edelmetallelektrode, welche beispielsweise als Metall-Keramik-Elektrode auf dem Festelektrolyten aufgebracht sein kann oder auf andere Weise mit dem Festelektrolyten in Verbindung stehen kann. Typische Elektrodenmaterialien sind Platin-Cermet-Elektroden. Auch andere Edelmetalle, wie beispielsweise Gold oder Palladium, sind jedoch grundsätzlich einsetzbar. Unter einem Heizelement ist im Rahmen der vorliegenden Erfindung ein Element zu verstehen, das zum Erwärmen des Festelektrolyten und der Elektroden auf mindestens ihre Funktionstemperatur und vorzugsweise auf ihre Betriebstemperatur dient. Die Funktionstemperatur ist diejenige Temperatur, ab der der Festelektrolyt für Ionen leitend wird und die ungefähr 350 °C beträgt. Davon ist die Betriebstemperatur zu unterscheiden, die diejenige Temperatur ist, bei der das Sensorelement üblicherweise betrieben wird und die höher ist als die Funktionstemperatur. Die Betriebstemperatur kann beispielsweise von 700 °C bis 950 °C sein. Das Heizelement kann einen Heizbereich und mindestens eine Zuleitungsbahn umfassen. Unter einem Heizbereich ist im Rahmen der vorliegenden Erfindung der Bereich des Heizelements zu verstehen, der in dem Schichtaufbau entlang einer zu der Oberfläche des Sensorelements senkrechten Richtung mit einer Elektrode überlappt. Üblicherweise erwärmt sich der Heizbereich während des Betriebs stärker als die Zuleitungsbahn, so dass diese unterscheidbar sind. Die unterschiedliche Erwärmung kann beispielsweise dadurch realisiert werden, dass der Heizbereich einen höheren elektrischen Widerstand pro Bahnlänge aufweist als die Zuleitungsbahn. Der Heizbereich und/oder die Zuleitung sind beispielsweise als elektrische Widerstandsbahn ausgebildet und erwärmen sich durch Anlegen einer elektrischen Spannung. Das Heizelement kann beispielsweise aus einem Platin-Cermet hergestellt sein.

Ein Grundgedanke der vorliegenden Erfindung ist das Vorsehen eines Dünnschicht-Multilayer-Systems auf einem Trägermaterial in der Reihenfolge Träger- Sauerstoffspeicher-Referenzelektrode-Elektrolyt-Messelektrode. Weiterhin wird ein gepumptes Referenzelektrodensystem für einen Chip, der sich vollständig im Messgas befinden kann, und eine Konkretisierung auf einen mikrostrukturierten Sensor gegenüber einer messgaszugewandten Referenzelektrode realisiert. Zwischen Referenzelektrode und Träger befindet sich ein Sauerstoffspeicher mit einer offenen Teilfläche in Kontakt mit dem Messgas. Der gasdurchlässige Kanal kann realisiert werden durch eine poröse Gestaltung der Referenzelektrode, eine Porosifizierung des Trägermaterials, wie beispielsweise mittels Ätzens, oder durch Aufbringen einer porösen Schicht zwischen das Trägermaterial. Eine planparallele Elektrodenanordnung ermöglicht kurze Wege für den Sauerstofftransport. Dadurch kann der Chip bei niedrigeren Betriebstemperaturen als die bisherige Betriebstemperatur eingesetzt werden, was beispielsweise vorteilhaft zur Minimierung der Heizleistung oder der Beschleunigung der Zeit bis zur Betriebsbereitschaft ist. Die planparallele Elektrodenanordnung ermöglicht eine homogenere Verteilung der Stromdichte auf die Elektrodenfläche, was für eine Alterungsstabilität vorteilhaft ist, da es keinen Bereich gibt, der besonders stark belastet wird.

### Kurze Beschreibung der Zeichnungen

Weitere optionale Einzelheiten und Merkmale der Erfindung ergeben sich aus der nachfolgenden Beschreibung bevorzugter Ausführungsbeispiele, welche in den Figuren schematisch dargestellt sind.

Es zeigen:
- Figur 1: eine Seitenansicht eines Sensorelements gemäß einer ersten Ausführungsform der Erfindung,
- Figur 2: eine Draufsicht auf das Sensorelement,
- Figur 3: eine Seitenansicht eines Sensorelements gemäß einer zweiten Ausführungsform der Erfindung,
- Figur 4: ein Sensorelement gemäß einer dritten Ausführungsform der Erfindung,
- Figuren 5A bis 5K: Verfahrensschritte zur Herstellung eines Sensorelements gemäß der Erfindung,
- Figur 6: eine Draufsicht auf ein Sensorelement mit einer ersten möglichen Anordnung eines Heizelements,
- Figur 7: eine Draufsicht auf ein Sensorelement mit einer zweiten möglichen Anordnung eines Heizelements,
- Figur 8: eine Draufsicht auf ein Sensorelement mit einer dritten möglichen Anordnung eines Heizelements,
- Figur 9: eine Draufsicht auf ein Sensorelement mit einer vierten möglichen Anordnung eines Heizelements,
- Figur 10: eine Draufsicht auf ein Sensorelement mit einer fünften möglichen Anordnung eines Heizelements,
- Figur 11: eine Draufsicht auf ein Sensorelement mit einer sechsten möglichen Anordnung eines Heizelements,
- Figur 12: eine Seitenansicht eines Sensorelements mit einer siebten möglichen Anordnung eines Heizelements.

### Ausführungsformen der Erfindung

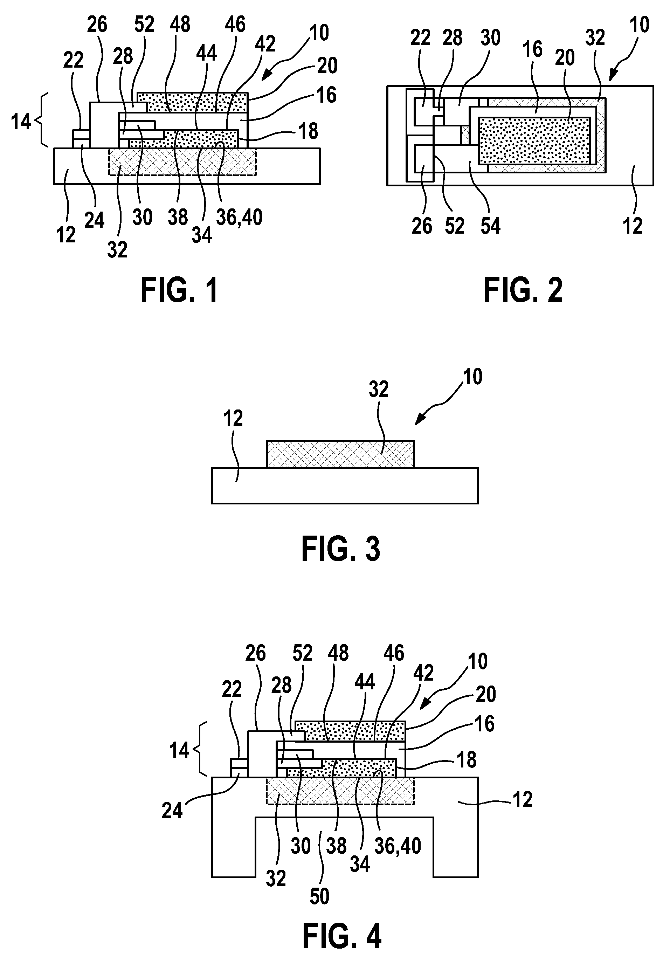

Figur 1 zeigt einen prinzipiellen Aufbau bzw. eine Draufsicht eines erfindungsgemäßen Sensorelements 10. Das in Figur 1 dargestellte Sensorelement 10 kann zum Nachweis von physikalischen und/oder chemischen Eigenschaften eines Messgases verwendet werden, wobei eine oder mehrere Eigenschaften erfasst werden können. Die Erfindung wird im Folgenden insbesondere unter Bezugnahme auf eine qualitative und/oder quantitative Erfassung einer Gaskomponente des Messgases beschrieben, insbesondere unter Bezugnahme auf eine Erfassung eines Sauerstoffanteils in dem Messgas. Der Sauerstoffanteil kann beispielsweise in Form eines Partialdrucks und/oder in Form eines Prozentsatzes erfasst werden. Grundsätzlich sind jedoch auch andere Arten von Gaskomponenten erfassbar, wie beispielsweise Stickoxide, Kohlenwasserstoffe und/oder Wasserstoff. Alternativ oder zusätzlich sind jedoch auch andere Eigenschaften des Messgases erfassbar. Die Erfindung ist insbesondere im Bereich der Kraftfahrzeugtechnik einsetzbar, so dass es sich bei dem Messgasraum insbesondere um einen Abgastrakt einer Brennkraftmaschine handeln kann und bei dem Messgas insbesondere um ein Abgas.

Das Sensorelement 10 weist ein Trägerelement 12 und einen Schichtaufbau 14 auf. Der Schichtaufbau 14 umfasst eine Festelektrolytschicht 16, eine erste Elektrode 18 und eine zweite Elektrode 20. Die Festelektrolytschicht 16 ist dabei sandwichartig von der ersten Elektrode 18 und der zweiten Elektrode 20 umgeben. Die Festelektrolytschicht 16 weist eine Dicke von 15 nm bis 25 µm und bevorzugt von 20 nm bis 20 µm auf, beispielsweise 15 µm. Die erste Elektrode 18 weist einen Anschlusskontakt 22 auf. Der Anschlusskontakt 22 ist gegenüber dem Trägerelement 12 mittels einer Isolationsschicht 24 elektrisch isoliert. Analog weist die zweite Elektrode 20 einen Anschlusskontakt 26 auf, der ebenfalls mittels der Isolationsschicht 24 gegenüber dem Trägerelement 12 elektrisch isoliert ist. Es können aber auch für die Isolation der Zuleitung der ersten Elektrode 18 und für die Isolation der Zuleitung der zweiten Elektrode 20 auch voneinander getrennte Isolationsschicht-Flächen verwendet werden, die sogar aus unterschiedlichen Materialien hergestellt sind. Eine Zuleitung 28 der ersten Elektrode 18 ist gegenüber der Festelektrolytschicht 16 mittels einer Isolationsschicht 30 elektrisch isoliert. Das Sensorelement 10 umfasst weiterhin eine poröse Schicht 32. Die poröse Schicht 32 ist in dem Trägerelement 12 so angeordnet ist, dass die poröse Schicht 32 dem Messgas aussetzbar ist. Die poröse Schicht 32 ist aufgrund der Porosität als sauerstoffspeichernde Schicht ausgebildet.

Figur 2 zeigt eine Draufsicht auf das Sensorelement 10. Wie zu erkennen ist, sind Anschlusskontakte 22, 26 der ersten Elektrode 18 und der zweiten Elektrode 20 rechteckig ausgebildet und nebeneinander auf dem Trägerelement 12 angeordnet. Eine der porösen Schicht 32 zugewandte Oberfläche 34 der ersten Elektrode 18 ist kleiner als eine der ersten Elektrode 18 zugewandte Oberfläche 36 der porösen Schicht 32. Des Weiteren ist eine der porösen Schicht 32 zugewandte Oberfläche 38 der Festelektrolytschicht 16 kleiner als eine der Festelektrolytschicht 16 zugewandte Oberfläche 40 der porösen Schicht 32. Grundsätzlich dürfte die Fläche der Festkörperelektrolytschicht 16 die Fläche der porösen Schicht 32 auch teilweise überragen, sofern sichergestellt ist, dass Gaszutritt zur porösen Schicht 32 möglich ist. Mit anderen Worten kann alternativ die Fläche der porösen Schicht 32 überragt werden, sofern ein Spalt oder dergleichen zur porösen Schicht 32 vorhanden bleibt, der eine Gaszutritt zur porösen Schicht 32 erlaubt. Die der ersten Elektrode 18 zugewandte Oberfläche 36 der porösen Schicht 32 und die der Festelektrolytschicht 16 zugewandte Oberfläche 40 der porösen Schicht 32 sind bei diesem Ausführungsbeispiel identisch. Weiterhin ist bevorzugt eine der ersten Elektrode 18 zugewandte Oberfläche 42 der Festelektrolytschicht 16 größer als eine der Festelektrolytschicht 16 zugewandte Oberfläche 44 der ersten Elektrode 18. Dadurch wird die Gefahr von Kurzschlüssen verringert. Alternativ sind die der ersten Elektrode 18 zugewandte Oberfläche 42 der Festelektrolytschicht 16 und die der Festelektrolytschicht 16 zugewandte Oberfläche 44 der ersten Elektrode 18 gleich groß. Außerdem ist bevorzugt eine der zweiten Elektrode 20 zugewandte Oberfläche 46 der Festelektrolytschicht 16 größer als eine der Festelektrolytschicht 16 zugewandte Oberfläche 48 der zweiten Elektrode 20. Dadurch wird die Gefahr von Kurzschlüssen verringert. Alternativ sind die der zweiten Elektrode 20 zugewandte Oberfläche 46 der Festelektrolytschicht 16 und die der Festelektrolytschicht 16 zugewandte Oberfläche 48 der zweiten Elektrode 20 gleich groß.

Figur 3 zeigt eine Seitenansicht eines Sensorelements 10 gemäß einer zweiten Ausführungsform der Erfindung. Nachfolgend werden lediglich die Unterschiede zu der vorhergehenden Ausführungsform beschrieben und gleiche Bauteile sind mit gleichen Bezugszeichen versehen. Zur Vereinfachung ist der Schichtaufbau 12 in den Darstellungen der Figur 3 nicht dargestellt. Die poröse Schicht 32 kann alternativ auf dem Trägerelement 12 angeordnet sein.

Figur 4 zeigt eine Seitenansicht eines Sensorelements 10 gemäß einer dritten Ausführungsform der Erfindung. Nachstehend werden lediglich die Unterschiede zu den vorhergehenden Ausführungsformen beschrieben und gleiche Bauteile sind mit gleichen Bezugszeichen versehen. Das Trägerelement 12 weist eine Aussparung 50 auf. Dadurch ist das Trägerelement unterhalb des Schichtaufbaus 12 ausgedünnt. Dies kann die Wärmekapazität des Trägerelements 12 reduzieren und entsprechend auch die erforderliche Heizleistung. Die Reststegdicke des Trägerelements 12 sollte aus Stabilitätsgründen dicker sein als die Schichtdicke der Festelektrolytschicht 16.

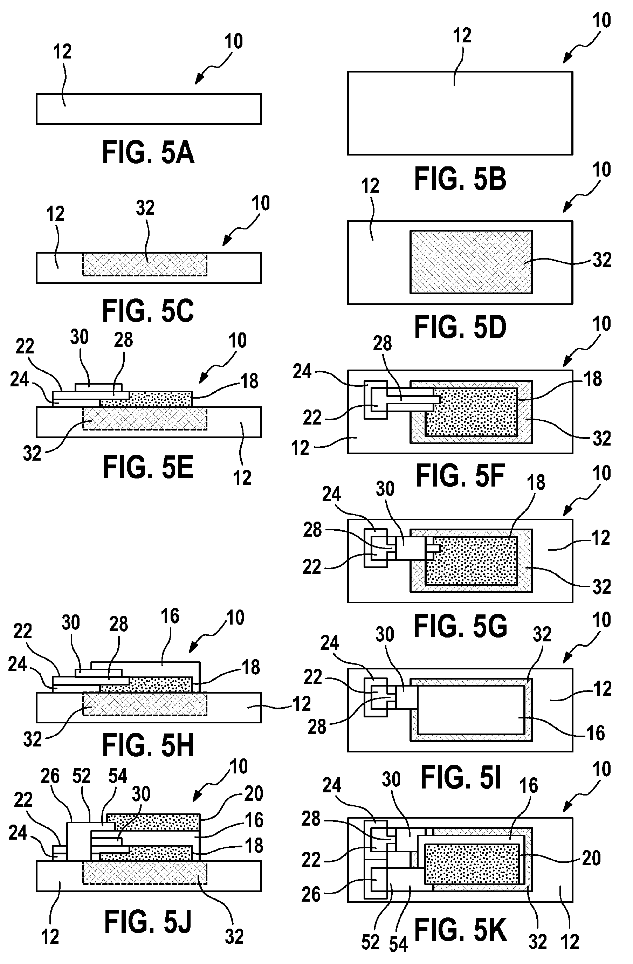

Nachstehend wird ein Verfahren zum Herstellen des Sensorelements 10 unter Bezugnahme auf die Figuren 5A bis 5I beschrieben.

Figur 5A zeigt eine Seitenansicht des Sensorelements 10. Als Grundlage dient ein Trägermaterial bzw. ein Trägerelement 12, das bereitgestellt wird. Hierbei kann es sich insbesondere um ein Halbleitersubstrat handeln, das aus Si, SiC hergestellt ist, oder beispielsweise einen Oxidkristall, eine Keramik oder ein Glas. Die Größen sind prinzipiell beliebig. Besonders vorteilhaft ist für Länge und Breite jeweils eine Ausdehnung von 0,5 mm bis 20 mm, beispielsweise 15 mm. Für die Höhe ist eine Ausdehnung von 0,1 mm bis 20 mm vorteilhaft, beispielsweise 10 mm.

Figur 5B zeigt eine Draufsicht auf das Trägerelement 12. Das Trägerelement 12 kann bezogen auf die Draufsicht eine rechteckige Grundfläche aufweisen, insgesamt also quaderförmig ausgebildet sein.

Figur 5C zeigt eine Seitenansicht des Sensorelements 10. Zur Herstellung eines Reservoirs als sauerstoffspeichernde Schicht in Form der porösen Schicht 32 wird in einen Bereich des Trägerelements 12 eine Porosifizierung durchgeführt. Hierbei kann es sich z.B. um einen Ionenätzprozess in dem Material des Trägerelements 12 handeln. Es können aber auch andere Mikrostrukturierungsverfahren verwendet werden, wie z.B. ein Gitterraster, das keine zufällige Porenstruktur, sondern ein regelmäßiges Muster aufweist, z.B. durch Laserstrukturierung. Vor Aufbringen der ersten Elektrode 18 kann das porosifizierte Material des Trägerelements 12 mit einem katalytisch aktivem Material oder einem Gettermaterial angereichert sein.

Figur 5D zeigt eine Draufsicht auf das Sensorelement 10. Die poröse Schicht 32 wird üblicherweise rechteckig bezogen auf die Draufsicht ausgebildet.

Figur 5E zeigt eine Seitenansicht des Sensorelements 10. Zur Herstellung der ersten Elektrode 18, die als Referenzelektrode dient, wird auf der porösen Schicht32 Material abgeschieden, das später als die Referenzelektrode wirksam ist. Beim Material kann es sich insbesondere um Platin oder platinhaltige Legierungen handeln, oder z.B. um Perowskite. Wesentlich ist, dass es sich um ein Material handelt, das in Kontakt mit einem Sauerstoffionenleiter einen Ausbau des Sauerstoffs ermöglicht. Bei der Prozessierung kann es sich beispielsweise um Sputtern, Aufdampfen oder um einen Druckprozess handeln. Auch Prozesse, wie z.B. Chemical Vapor Deposition, bei denen das Material zunächst in einer anderen Verbindung vorliegt, und nach Ablagerung auf der Oberfläche zum späteren Elektrodenmaterial reagiert, sind denkbar. Die Grenzfläche zwischen der ersten Elektrode 18 und dem Trägerelement 12 muss nicht unbedingt glatt sein, das Material darf auch in die Poren bzw. strukturierten Bereiche des porosifizierten Trägermaterials eindringen, Hauptsache, es bleiben noch zusammenhängende Bereiche der porosifizierten Schicht ohne Ausfüllung, um die spätere Funktion als Gasspeicher aufrecht erhalten zu können. Bei der Struktur des Elektrodenmaterials ist es ebenfalls vorteilhaft, wenn es selbst eine Porosität aufweist, um einen elektrochemischen Austausch mit Gas zu ermöglichen. Die Dicke der Elektrodenschicht ist in einem großen Bereich funktionsfähig, insbesondere mit einer Dicke von 5 nm bis 50 µm, beispielsweise 30 µm. Damit der Gasspeicher gleichzeitig auch als Überdruck-Drossel funktioniert, darf die Elektrodenfläche die porosifizierte Fläche nicht vollständig überdecken. Aus diesem Grund ist die der porösen Schicht 32 zugewandte Oberfläche 34 der ersten Elektrode 18 kleiner als die der ersten Elektrode 18 zugewandte Oberfläche 36 der porösen Schicht 32.

Zur späteren elektrischen Kontaktierung der ersten Elektrode 18 wird die Zuleitung 28 aufgebracht. Bei dem Material der Zuleitung 28 kann es sich beispielsweise um das gleiche Material handeln wie bei der eigentlichen Elektrode, jedoch ist hier die Porosität nicht wesentlich und kann auch vollmassiv ausfallen. Beispielsweise kann die Zuleitung 28 aus Platin hergestellt sein und eine Dicke von 5 nm bis 50 µm, beispielsweise 40 µm, und eine Breite von 10 µm bis 500 µm, beispielsweise 400 µm, aufweisen. Ein Ende der Zuleitung 28 kann mit dem Anschlusskontakt 22 versehen sein, der die spätere Anschlussfläche für einen elektrischen Kontakt, wie z.B. Bonddraht, darstellt, und kann beispielsweise kreisförmig oder rechteckig ausgelegt sein. Der Anschlusskontakt 22 kann einen Durchmesser haben, der z.B. einen Faktor 2-10 größer ist als die Breite der Zuleitung 28. Je nach Material des Trägerelements 12 ist es vorteilhaft, wenn die Zuleitung 28 und das der Anschlusskontakt 22 elektrisch vom Trägerelement 12 isoliert sind. Dies kann erreicht werden durch das Aufbringen der Isolationsschicht 24, die aus einem elektrisch isolierenden Material hergestellt wird, z.B. Aluminiumoxid.

Figur 5F zeigt eine Draufsicht des Sensorelements 10. Wie zu erkennen ist, nimmt die erste Elektrode 18 bezogen auf die Draufsicht einen kleinere Fläche als die poröse Schicht 32 ein.

Figur 5G zeigt eine Draufsicht des Sensorelements 10. Eine weitere optionale Isolationsschicht 30 kann auf der Zuleitung 28 aufgebracht werden, damit der elektrochemische Kontakt zum Sauerstoffionenleiter nur von der eigentlichen Elektrode bestimmt wird. Beim Aufbringen der Isolationsschicht 30 soll der Bereich des Anschlusskontakts 22 freigelassen werden.

Figur 5H zeigt eine Seitenansicht des Sensorelements 10. Anschließend wird die Festelektrolytschicht 16 aufgebracht. Die Festelektrolytschicht 16 wird aus einem sauerstoffionenleitenden Material hergestellt. Hierbei kann es sich insbesondere um Yttrium-stabilisiertes Zirkonoxid (YSZ) handeln oder beispielsweise um Perowskite. Bei der Festelektrolytschicht 16 ist eine Dicke von 20 nm bis 20 µm besonders vorteilhaft, beispielsweise 15 µm. Die Festelektrolytschicht 16 kann planar sein und eine homogene Dicke haben. Je nach Oberflächenmorphologie der ersten Elektrode 18 kann die Dicke der Festelektrolytschicht 16 auch inhomogen sein und/oder keine ebene Fläche darstellen.

Figur 5I zeigt eine Seitenansicht des Sensorelements 10. Wichtig ist insbesondere, dass die erste Elektrode 18 vollständig vom lonenleiter-Material abgedeckt ist und sich keine elektrischen Kurzschlüsse zwischen der ersten Elektrode 18 und der nachfolgend aufzubringenden zweiten Elektrode 20, die als Messelektrode dient, ausbilden. Die Fläche der Festelektrolytschicht 16 kann über die Fläche der zweiten Elektrode 20 herausragen. Wichtig ist, dass ein Teil der porösen Schicht 32 auf dem Trägerelement 12 weiterhin unbedeckt bleibt, um die Funktion als Überdruckdrossel zu erfüllen.

Figur 5J zeigt eine Seitenansicht des Sensorelements 10. Auf die Festelektrolytschicht 16 wird ein Material für die zweite Elektrode 20 aufgebracht. Es kann sich dabei um das gleiche oder ein ähnliches Material handeln wie bei der ersten Elektrode 18, so dass die zweite Elektrode 20 vorzugsweise aus porösem Platin hergestellt wird. Ebenfalls wird die zweite Elektrode 20 mit einer Zuleitung 52, dem Anschlusskontakt 26 und einer die Zuleitung 52 bedeckenden Isolationsschicht 54 versehen.

Figur 5K zeigt eine Draufsicht des Sensorelements 10. Vorteilhaft ist, wenn die Fläche der zweiten Elektrode 20 etwas kleiner ist als die der Festelektrolytschicht 16, damit das Risiko von Kurzschlüssen zur ersten Elektrode 18 verringert wird. In Figur 5K befindet sich der Anschlusskontakt 26 der zweiten Elektrode 20 in Nachbarschaft zum Anschlusskontakt 22 der ersten Elektrode 18. Die Anschlusskontakte 22, 26 und Zuleitungen 28, 50 können aber beispielsweise alternativ an entgegengesetzten bzw. gegenüberliegenden Seiten liegen. Ein größerer Abstand kann vorteilhaft sein, um bei Anwendungen des Sensorelements 10 im Abgas durch Ablagerungen verursachte elektrische Kurzschlüsse zu vermeiden.

Die verwendeten Schichten des Schichtaufbaus 14 können zur Verbesserung der Haftung bzw. zum Ausgleich verschiedener thermischer Ausdehnungskoeffizienten mit Zwischenschichten, z.B. Haftschichten oder Schichten aus Mischmaterial der zusammenzufügenden Schichten hergestellt werden.

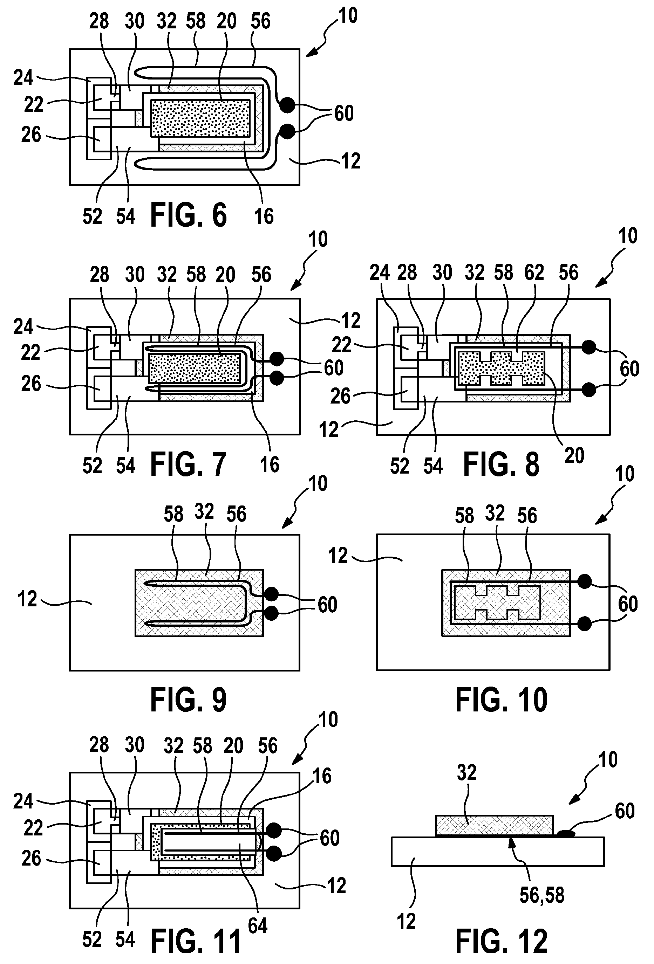

Figur 6 zeigt eine Draufsicht auf ein Sensorelement 10 mit einer ersten möglichen Anordnung eines Heizelements 56. Mit anderen Worten kann das Sensorelement 10 ein Heizelement 56 zum Erwärmen der Festelektrolytschicht 16 aufweisen, wie nachstehend ausführlicher beschrieben wird. Nachstehend werden lediglich die Unterschiede zu den vorhergehenden Ausführungsformen beschrieben und gleiche Bauteile sind mit gleichen Bezugszeichen versehen. Grundsätzlich kann das Sensorelement 10 wie zuvor beschrieben hergestellt werden. Bei dem in Figur 6 dargestellten Sensorelement 10 wird zusätzlich das Heizelement 56 vorgesehen. Das Heizelement 56 umfasst eine Leiterbahn 58 und zwei Anschlusskontakte 60, mit denen die Leiterbahn 58 elektrisch verbunden ist. Die Leiterbahn 58 ist bevorzugt als elektrische Widerstandsbahn ausgebildet. Die Leiterbahn 58 ist auf dem Trägerelement 12 angeordnet und umgibt die poröse Schicht 32 im Wesentlichen U-förmig. Die Anschlusskontakte 60 sind kreisförmig ausgebildet. Die Anschlusskontakte 60 sind ebenfalls auf dem Trägerelement 12 angeordnet. Die Anschlusskontakte 60 sind genauer nebeneinander auf einer den Anschlusskontakten 22, 26 der ersten Elektrode 18 und der zweiten Elektrode 20 entgegengesetzten bzw. gegenüberliegenden Seite des Trägerelements 12 angeordnet.

Figur 7 zeigt eine Draufsicht auf ein Sensorelement 10 mit einer zweiten möglichen Anordnung eines Heizelements 56. Im Vergleich zu dem Sensorelement 10 der Figur 6 ist die zweite Elektrode 20 kleiner ausgebildet und die Leiterbahn 58 ist auf der Festelektrolytschicht 16 angeordnet und umgibt die zweite Elektrode 20 im Wesentlichen U-förmig.

Figur 8 zeigt eine Draufsicht auf ein Sensorelement 10 mit einer dritten möglichen Anordnung eines Heizelements 56. Im Vergleich zu dem Sensorelement 10 der Figur 7 weist die zweite Elektrode 20 Ausnehmungen 62 an ihren Außenrändern auf. Die Leiterbahn 58 erstreckt sich parallel zu den Ausnehmungen 62, so dass diese mehr Windungen im Vergleich zu dem Sensorelement der Figur 7 aufweist. Dadurch wird die Wärme des Heizelements 56 nicht nur am Rand der Festelektrolytschicht 16 in diese eingebracht.

Figur 9 zeigt eine Draufsicht auf ein Sensorelement 10 mit einer vierten möglichen Anordnung eines Heizelements 56. Im Vergleich zu dem Sensorelement 10 der Figur 7 ist die Leiterbahn 58 auf der porösen Schicht 32 angeordnet, weist im Übrigen aber die gleiche Form auf. Hierbei ist die aus Darstellungsgründen nicht abgebildete erste Elektrode 18 kleiner ausgebildet und wird von der Leiterbahn 58 im Wesentlichen U-förmig umgeben.

Figur 10 zeigt eine Draufsicht auf ein Sensorelement 10 mit einer fünften möglichen Anordnung eines Heizelements 56. Im Vergleich zu dem Sensorelement 10 der Figur 8 ist die Leiterbahn 58 auf der porösen Schicht 32 angeordnet, weist im Übrigen aber die gleiche Form auf. Hierbei ist die aus Darstellungsgründen nicht abgebildete erste Elektrode 18 kleiner ausgebildet, weist an ihren Außenrändern Ausnehmungen auf, zu denen sich die Leiterbahn 58 parallel erstreckt.

Figur 11 zeigt eine Draufsicht auf ein Sensorelement 10 mit einer sechsten möglichen Anordnung eines Heizelements 56. Im Vergleich zu dem Sensorelement 10 der Figur 6 oder 7 ist die zweite Elektrode 20 von einer gasdurchlässigen Abdeckschicht 64 bedeckt. Die Abdeckschicht 64 bedeckt die zweite Elektrode 20 zumindest teilweise. Bei dem in Figur 11 gezeigten Sensorelement ist die Abdeckschicht 64 beispielsweise kleiner als die zweite Elektrode 20. Die Abdeckschicht 64 ist porös oder mikrostrukturiert, ist in jedem Fall aber so ausgebildet, dass ein Zutritt des Messgases zu der zweiten Elektrode 20 ermöglicht ist. Die Leiterbahn 58 ist auf der Abdeckschicht 64 angeordnet. Die Abdeckschicht 64 ist beispielsweise aus porösem Aluminiumoxid hergestellt. Die Abdeckschicht 64 kann beispielsweise mit katalytisch aktivem Material oder mit Gettermaterial angereichert sein, um elektrodenschädliche Substanzen im Messgas von den Elektroden 18, 20 abzuhalten.

Figur 12 zeigt eine Draufsicht auf ein Sensorelement 10 mit einer siebten möglichen Anordnung eines Heizelements 56. Im Vergleich zu den zuvor beschriebenen Sensorelementen 10 ist die poröse Schicht 32 auf dem Trägerelement 12 angeordnet. Außerdem ist das Heizelement 56 unterhalb der porösen Schicht 32 und somit zwischen der porösen Schicht 32 und dem Trägerelement 12 angeordnet.

Bei allen zuvor beschriebenen Sensorelementen 10 mit Heizelement 56 müssen ggf. neben dem eigentlichen Heizelement 56 noch eine nicht näher gezeigte elektrische Isolierung zur Unterlage hinzugefügt werden.

Eine Optimierung kann erfolgen, wenn die Anschlusskontakte 22, 26, 60 der Elektroden 18, 20 und/oder des Heizelements 56 nicht eng benachbart sind, sondern möglichst große Abstände haben. Am besten erfolgt eine Gesamtoptimierung mit den Anschlusskontakten 22, 26 der Elektroden 18, 20 sowie den Anschlusskontakten 60 des Heizelements 56. Möglichst große Abstände steigern die Robustheit gegenüber Kurzschlüssen durch Ablagerungen. Gegebenenfalls können nach Kontaktierung mit den Zuleitungen die Anschlusskontakte 22, 26, 60 der Elektroden 18, 20 und/oder des Heizelements 56 auch mit weiteren Schichten abgedeckt werden, um Kurzschlüsse zu vermeiden.

Zur Temperaturmessung kann der elektrische Widerstand der Festelektrolytschicht 16 als Maß für die Temperatur verwendet werden, was für die Regelung des Heizelements 56 genutzt werden kann, um eine konstante Betriebstemperatur zu erreichen. Aufgrund des kurzen Weges für die Sauerstoffleitung mit dem planparallelen Elektrodensystem bei der vorliegenden Erfindung und dem dünnen Ionenleiter kann der elektrische Widerstand des Elektrolyten sehr gering sein und beispielsweise im einstelligen Ohmbereich liegen. Bei der Messung des Elektrolytwiderstands über hochfrequente Messpulse können auch Kontakt- und Zuleitungswiderstände miterfasst werden, die typischerweise ebenfalls im einstelligen Ohmbereich liegen. Die genauen Werte können eine gewisse fertigungsbedingte Streuung aufweisen. Da hier nicht mehr zwangsläufig gilt, dass der Widerstand der Festelektrolytschicht 16 viel größer als die Summe der Widerstände der Zuleitungen 28, 52 und der Anschlusskontakte 22, 26, kann die Bestimmung der Temperatur ungenau werden, wenn nicht jedes einzelne Sensorelement kalibriert werden soll. Aus diesem Grund ist es vorteilhaft, einen weiteren Temperaturfühler in das Sensorelement 10 einzubauen, z.B. einen elektrischen Widerstand. Hierfür kann auch das ohnehin vorhandene Heizelement 56 genutzt werden, was den Vorteil verschafft, dass keine weiteren Anschlüsse und Zuleitungen erforderlich sind. Hier ist das Material des Heizelements 56 so zu wählen, dass die Temperaturkoeffizienten möglichst hoch sind. Je höher die Temperaturkoeffizienten sind, umso genauer kann die Temperatur erfasst werden. Jedoch bestehen neben Randbedingungen der Materialchemie auch systemseitige Zwänge, wie z.B. Obergrenzen bei der vorhandenen elektrischen Spannung und die erforderliche Heizleistung.

Grundsätzlich wird das Sensorelement 10 derart betrieben, dass zwischen der ersten Elektrode 18 und der zweiten Elektrode 20 über eine Stromquelle ein Strom angelegt wird, der in einem Bereich von 1nA bis 2 mA liegen kann. Alternativ kann auch eine Spannungsquelle mit vorgeschaltetem Widerstand verwendet werden. Als Messsignal wird dabei die Spannung zwischen der ersten Elektrode 18 und der zweiten Elektrode 20 ausgewertet. Das Sensorelement 10 wird idealerweise bei einer Temperatur von 200 °C bis 900 ° betrieben. Um die Temperatur zu bestimmen, muss die Temperatur erfasst werden können. Bei einer ersten möglichen Messmethode für die Temperatur werden auf den Strom bzw. die Spannung zur Führung des Referenzpumpstroms zusätzliche kurze Messpulse mit einer Frequenz von 0,1 Hz bis 1 MHz mit einer Amplitude von 1mV bis 1 V aufgeprägt und entsprechend die Stromänderung betrachtet, gegebenenfalls werden bestimmte Zeitpunkte aus einem transienten Signal gewählt. Aus dem Verhältnis der Stromänderung bzw. Spannungsänderung kann auf die Temperatur der Festelektrolytschicht 16 und der Elektroden 18, 20 geschlossen werden. Bei einer zweiten möglichen Messmethode für die Temperatur wird das Heizelement 56 aufgrund der verwendeten Materialien so gestaltet, dass die Abhängigkeit von der Temperatur besonders stark ist. Dann lässt sich durch Auslesen des Widerstands des Heizelements 56 die Temperatur des Heizelements 56 ermitteln, da diese Temperatur aufgrund der räumlichen Nähe mit der Temperatur der Festelektrolytschicht 16 verknüpft ist. Beide Messmethoden können auch kombiniert werden, da beispielsweise bei Raumtemperatur der Widerstand nach der ersten Temperaturmessmethode extrem hoch sein kann und zu einem Messbereichsanschlag führen kann. In so einem Fall ist es sinnvoll, im Niedertemperaturbereich die zweite Messmethode zu verwenden und bei höheren Temperaturen die erste Messmethode.

Die Menge an in der porösen Schicht 32 gespeichertem Sauerstoff ergibt sich über die Dicke der porösen Schicht 32, der Porosität, Porengröße, der Öffnungsfläche und ist auch vom Messgas abhängig. Sie ergibt sich aus der Überlagerung von elektrochemisch eingepumptem Sauerstoff, ausdiffundierendem Sauerstoff und Eindringen von reduzierenden Komponenten aus dem Messgas, die einen Teil des Sauerstoffs aufzehren. Eine völlige Gasisolierung vom Messraum ist jedoch nicht vorteilhaft, da sonst ein Überdruck durch das laufende elektrochemische Pumpen entstehen würde. Das laufende elektrochemische Pumpen ist wiederum erforderlich, damit ein Messsignal kontinuierlich vorliegt, was für die Systemanforderung eines Lambdasensors im Kraftfahrzeug vorteilhaft ist.

## Patentansprüche

1. Sensorelement (10) zur Erfassung mindestens einer Eigenschaft eines Messgases in einem Messgasraum, insbesondere zur Erfassung eines Anteils einer Gaskomponente in dem Messgas oder einer Temperatur des Messgases, umfassend ein Trägerelement (12) und einen Schichtaufbau (14), wobei der Schichtaufbau (14) mindestens eine Festelektrolytschicht (16), eine erste Elektrode (18) und eine zweite Elektrode (20) umfasst, wobei der Schichtaufbau (14) auf dem Trägerelement (12) angeordnet ist.

2. Sensorelement (10) nach dem vorhergehenden Anspruch, wobei die Festelektrolytschicht (16) eine Dicke von 15 nm bis 25 µm und bevorzugt von 20 nm bis 20 µm aufweist.

3. Sensorelement (10) nach einem der vorhergehenden Ansprüche, weiterhin umfassend eine poröse Schicht (32), wobei die poröse Schicht (32) so in oder auf dem Trägerelement (12) angeordnet ist, dass die poröse Schicht (32) dem Messgas aussetzbar ist.

4. Sensorelement (10) nach dem vorhergehenden Anspruch, wobei die erste Elektrode (18) auf der porösen Schicht (32) angeordnet ist.

5. Sensorelement (10) nach einem der beiden vorhergehenden Ansprüche, wobei eine der porösen Schicht (32) zugewandte Oberfläche (34) der ersten Elektrode (18) kleiner als eine der ersten Elektrode (18) zugewandte Oberfläche (36) der porösen Schicht (32) ist.

6. Sensorelement (10) nach einem der drei vorhergehenden Ansprüche, wobei eine der porösen Schicht (32) zugewandte Oberfläche (38) der Festelektrolytschicht (16) kleiner als, gleich groß wie oder größer als eine der Festelektrolytschicht (16) zugewandte Oberfläche (40) der porösen Schicht (32) ist.

7. Sensorelement (10) nach einem der vorhergehenden Ansprüche, wobei die erste Elektrode (18) einen Anschlusskontakt (22) aufweist, wobei der Anschlusskontakt (22) gegenüber dem Trägerelement (12) elektrisch isoliert ist.

8. Sensorelement (10) nach einem der vorhergehenden Ansprüche, wobei eine der ersten Elektrode (18) und/oder der zweiten Elektrode (20) zugewandte Oberfläche (42, 46) der Festelektrolytschicht größer ist als eine der Festelektrolytschicht (16) zugewandte Oberfläche der ersten Elektrode und/oder der zweiten Elektrode (44, 48).

9. Sensorelement (10) nach einem der vorhergehenden Ansprüche, weiterhin umfassend ein Heizelement (56) zum Erwärmen der Festelektrolytschicht (16).

10. Sensorelement (10) nach dem vorhergehenden Anspruch, wobei das Heizelement (56) auf dem Trägerelement (12), auf der Festelektrolytschicht (16), auf der porösen Schicht (32) oder einer die zweite Elektrode bedeckenden gasdurchlässigen Abdeckschicht (64) angeordnet ist.
